# EUROPEAN PATENT SPECIFICATION

(11) **EP 2 982 997 B1**
(45) Date of publication and mention of the grant of the patent: **08.05.2024**
(21) Application number: 14179710.0
(22) Date of filing: 04.08.2014
(51) Int. Cl.: G01R 31/28, G01R 31/317, G01R 31/30, G01R 19/165, G01R 19/25, G01R 19/30, G06F 21/75

(54) **METHOD AND APPARATUS FOR SUPPLY VOLTAGE GLITCH DETECTION IN A MONOLITHIC INTEGRATED CIRCUIT DEVICE**
VERFAHREN UND VORRICHTUNG ZUR VERSORGUNGSSPANNUNGS-STÖRSIGNALDETEKTION IN EINER MONOLITHISCHEN INTEGRIERTEN SCHALTVORRICHTUNG
PROCÉDÉ ET APPAREIL DE DÉTECTION DE SIGNAUX TRANSITOIRES DE TENSION D'ALIMENTATION DANS UN DISPOSITIF À CIRCUIT INTÉGRÉ MONOLITHIQUE

(43) Date of publication of application: 10.02.2016
(73) Proprietor: Winbond Electronics Corp., Taichung City 428 (TW)
(72) Inventor: Tasher, Nir, 40600 Tel Mond (IL); Teper, Valery, 49001 Petach-Tikva (IL); Cheng, Dennis Chin, Palo Alto, CA 94303 (US); Huang, Koying, San Jose, CA 95129 (US)
(74) Representative: Fuchs Patentanwälte Partnerschaft mbB

(56) References cited:
- EP-A1- 0 568 440
- EP-A1- 1 804 199
- WO-A1-98/50859
- WO-A1-2006/114727
- DE-A1- 10 120 147
- US-A1- 2003 226 082
- US-A1- 2006 033 486
- US-A1- 2006 214 672
- US-A1- 2011 074 398
- US-B1- 6 392 432
- US-B1- 7 003 421
- MICHAEL RIZK ET AL: "Optimizing the automatic selection of spike detection thresholds using a multiple of the noise level", MEDICAL & BIOLOGICAL ENGINEERING & COMPUTING, SPRINGER, BERLIN, DE, vol. 47, no. 9, 10 February 2009 (2009-02-10), pages 955-966, XP019835354, ISSN: 1741-0444

## Description

### BACKGROUND OF THE INVENTION

### Field of the Invention

The present invention relates to detection of out-of-spec operation of monolithic integrated circuit devices, and more particularly to supply voltage glitch detection in monolithic integrated circuit devices.

### Description of Related Art

Some types of monolithic integrated circuit devices contain one or more analog detection circuits that monitor the operational conditions of the device such as, for example, supply or internal voltages, temperature, and clock rate, to detect when the device operates outside of specific margins. When such an out-of-spec condition is detected, the analog detection circuit causes the monolithic silicon device to be placed in a state such as power off or reset that prevents incorrect operation of the device or damage to the device or system in which the device is used.

Establishing the operating condition margins is challenging, since the detection circuit can false trigger if the margins are too narrow, and can become overly unresponsive if the margins are too broad.

Improvement in the monitoring of the operational conditions of the device detection circuits is desirable to reduce the risk of false triggers on the one hand and non responsiveness on the other.

US 2011/074398 A1 discloses a monitor and control module which is configured to monitor for droop events during debug stage, a characterization stage, and/or during normal operation of IC.

US 2003/ 226082 A1 discloses a voltage-glitch detection circuit including a voltage comparator for detecting a glitch by comparing a reference voltage with a glitch detection voltage.

US 7 003 412 B1 discloses a method for determining overvoltage or undervoltage conditions by comparing a supply voltage with a reference voltage in a comparator.

DE 101 20 147 A1 discloses a circuit for detecting short voltage glitches by comparing a first input with a second input in a comparator.

EP 0 568 440 A1 discloses a circuit for detecting an incorrect reading by determining whether the inputted supply voltage is within the defined range or not

US 2006/214672 A1discloses a circuit for detecting power supply noise by comparing a voltage of a power supply line with a voltage of a reference power supply line.

US 2006/033486 A1 discloses a circuit for detecting a transient voltage by comparing a transient voltage with a threshold voltage for an electronic system.

EP 1 804 199 A1 discloses an electronic circuit for detecting accidental or deliberate interference by comparing a system supply voltage with a threshold voltage in the supply of the electronic circuit.

Finally, WO 2006/114727 A1 discloses a distributed supply voltage monitoring system for detecting cross talk, or supply noise etc., by comparing a current supply voltage measurement with an average value of supply voltage produced by a filter and digital to analogue converter.

### SUMMARY OF THE INVENTION

The present invention is directed to a method for detecting a glitch according to claim 1 and to a monolithic integrated circuit device according to claim 7. Embodiments of the invention are described in the dependent claims.

### BRIEF DESCRIPTION OF THE SEVERAL VIEWS OF THE DRAWINGS

FIG. 1 is a schematic block diagram of various signals associated with an illustrative adaptive supply voltage glitch detector.
FIG. 2 is a table showing illustrative threshold voltage levels and pulse width settings for the glitch detector of FIG. 1.
FIG. 3 is a set of waveforms showing various operations of the glitch detector of FIG 1.
FIG. 4 is a set of idealized timing waveforms for the setting and resetting of the low and high supply voltage alarms of the adaptive glitch detector of FIG. 1, using adaptive supply voltage glitch detection.
FIG. 5 is a schematic circuit diagram of an illustrative implementation of the adaptive glitch detector 10 of FIG. 1.
FIG. 6 is a flow chart showing an illustrative operating sequence for the adaptive glitch detector of FIG. 1.
FIG. 7 is a schematic block diagram of an illustrative secure monolithic integrated device.
FIG. 8 is a schematic block diagram of an illustrative non-secure monolithic integrated device.

### DETAILED DESCRIPTION OF THE INVENTION

A monolithic integrated circuit device may include one or more nonvolatile digital memory arrays of various types such as EEPROM, Flash and SRAM, and related circuits such as buffers, registers, control logic, addressing circuits, and voltage pumps. Depending on the functional requirements, the device may also include other circuits such as processors, input/output controllers, analog-to-digital and digital-to-analog converters, reset and interrupt circuits, field-programmable gate arrays ("FPGA"), and/or other circuits. The integrated circuit device may also include a supply voltage glitch detector for detecting improper transient supply voltage conditions. Advantageously, the detection threshold of the supply voltage glitch detector is adaptively configured based on the mode of operation of the device or a particular part of the device, which is internally known to the device based on certain inputs received by the device, such as commands, interrupts, control signals, and so forth. Consider, for example, a supply voltage glitch detector having an adaptive low voltage threshold that varies as a function of the mode of operation of a flash memory array in the integrated circuit device. The minimum supply voltage for such a device may be specified at 1.62 volts, and the supply voltage monitor may have a default low voltage threshold of 1.4 volts (a 0.22 volt margin) which is suitable for many common operations including memory read operations. However, the low voltage threshold may be temporarily reduced to 1.3 volts (a 0.32 volt margin) for such operations as memory program and erase operations, which are likely to cause voltage glitches of under 1.4 volts which would falsely trigger a protective state if the low threshold were not adaptively modified. The 1.3 volts and 1.4 volts threshold levels are illustrative, since in practice the various thresholds may be set based on a variety of factors such as process, voltage and temperature ("PVT") variation effects and internal current consumption effects.

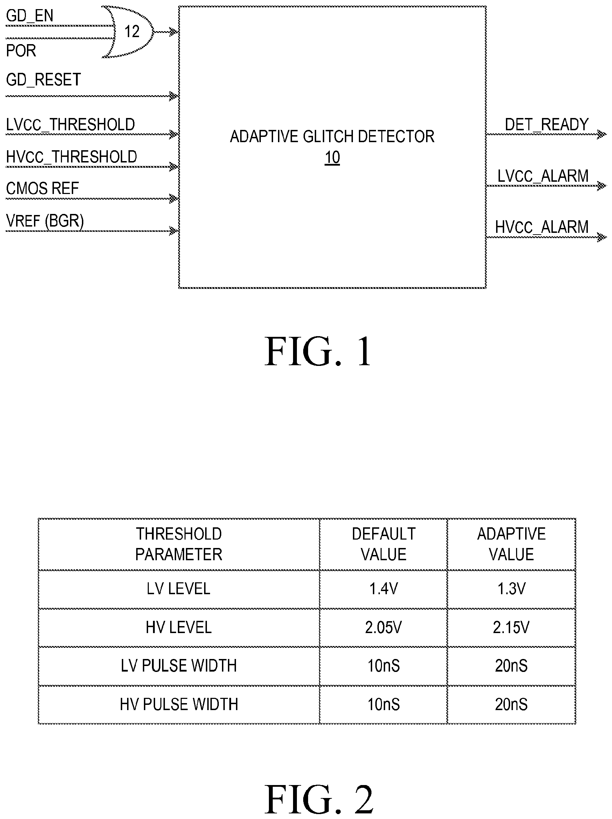

FIG. 1 is a schematic block diagram of the various signals associated with an illustrative adaptive supply voltage glitch detector 10. Illustratively, the glitch detector 10 monitors for both low voltage and high voltage glitches, and provides output signals LVcc_ALARM and HVcc_ALARM to indicate a low threshold alarm condition and a high threshold alarm condition respectively. Illustratively, LVcc_ALARM and HVcc_ALARM are latched signals, which are set in a latched alarm state when the respective thresholds are violated; specifically when the supply voltage respectively drops below the low threshold or exceeds the high threshold. Signals LVcc_ THRESHOLD and HVcc_THRESHOLD may be used to adaptively set the detection threshold of the supply voltage glitch detector based on the mode of operation of the device or a particular part of the device. Additional input signals may include a reference voltage CMOS REF or V_{REF} (BGR), a reset signal GD_RESET, a glitch detector enable signal GD_EN, and a power-on-reset signal POR. The enable signal GD_EN and the power-on-reset signal POR may be applied to an enable input EN through an OR gate 12 or equivalent. Additionally, a detector-ready output signal DET_READY may be provided. Certain default operating conditions such as the low threshold level and pulse width and the high threshold level and pulse width may be established during manufacture.

FIG. 2 is a table showing illustrative default and adaptive values for various illustrative low threshold and high threshold parameters, for the glitch detector 10 of FIG. 1. Illustratively, the low threshold voltage level may be set to 1.4 volts by default and to 1.3 volts adaptively, and the high threshold voltage level may be set to 2.05 volts by default, and to 2.15 volts adaptively. Illustratively, the low threshold minimum glitch duration may be set to 10 nanoseconds by default and to 20 nanoseconds adaptively, and the high threshold minimum glitch duration may be set to 10 nanoseconds by default and to 20 nanoseconds adaptively.

The low and high threshold voltage and pulse width settings for various modes of operations may be established by taking into account the reasonable worst cases for those operations, including, for example, worst case process, voltage and temperature ("PVT") variation effects and internal current consumption effects. The low threshold side of the operating window for a particular operation mode of the device, for example, may meet the following criteria: just above the power-on-reset ("POR") level, as well as just above the supply voltage level at which the logic functions properly. When the supply voltage is below this level, the normal behavior of the device likely is compromised and the device may behave randomly. The predetermined operating window of the supply voltage for glitch detection may be wider than the supply voltage range in the specification; for example, V_{CC} in the specification may be listed as 1.62V to 1.98V (1.8v +/- 10%), whereas the operating window for glitch detection corresponding to a particular set of device modes of operation may be determined to be 1.4 volts to 2.05 volts, and corresponding to another particular set of device modes of operation may be determined to be 1.3 volts to 2.15 volts, to provide sufficient margins or a guard band to the V_{CC} range of the device specification even while taking into account PVT variation effects and internal current consumption effects, including voltage variations due to impedance effects and current drops and surges due to device activity.

Having an adaptively set operating window for glitch detection is advantageous over a static operating window. Some worst case operation(s) such as, for example, program and erase operations in embedded flash memory, may create an amount of impedance-related voltage fluctuations and noise that is substantially greater that the voltage fluctuations and noise created by other operations. The flash cell program and erase operation, for example, may create a large current surge by enabling on-chip charge pump(s). Drain programming current, for example, may be about 100uA per flash cell (at about 4 volts drain voltage) for channel hot electron injection, and therefore may be cumulatively about 800uA in the case of programming eight cells (that is, one byte). The voltage supply current (I_{CC}) for charge pump(s) can easily reach many milli-amperes since voltage is pumped from the Vcc level (typically 1.8V) to a higher pumped level of about 4 volts, for example. During erase operation (tunneling), although cell current is sub micro-ampere, there may nonetheless be a few milli-amperes of current associated with enabling positive and negative charge pumps. Such current surges due to enabling charge pump(s) during program and erase operations may impose undershoot and overshoot effects on the supply voltage, which a glitch detector operating with a static operating window may misconstrued as an out-of-spec event, leading to an false alarm which in turn may trigger an unnecessary and disruptive protective action such as device shut-off or reset.

The adaptively set operating window for glitch detection may also take into account glitch duration. Establishing different minimum glitch duration settings for different device modes of operation allows for various problems afflicting some modes of operation to be avoided without sacrificing glitch detection accuracy for other modes of operation. Due to internal inherent on-chip impedances, there is a certain minimum glitch duration, typically a few nanoseconds, before a glitch can be successfully detected by on-chip glitch detection circuitry for a particular mode of operation. Moreover, it may be advantageous to design for a certain minimum glitch duration, for example 10nS, since shorter glitches such as, for example, 3nS to 4nS, may not have a deleterious effect in a particular mode of operation.

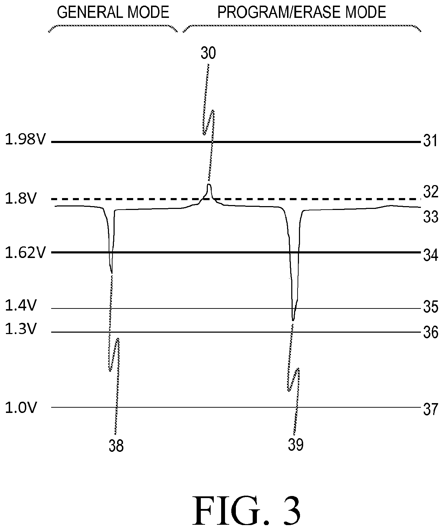

The foregoing behavior is illustrated in FIG. 3 for an exemplary monolithic integrated circuit device which includes a flash memory array and is specified for operation within an illustrative set of operating conditions. Illustratively, V_{CC} is specified at 1.8V as shown by line 32, not to exceed a maximum V_{CC} of 1.98V as indicated by line 31, and not to be less than a minimum V_{CC} of 1.62V as indicated by line 34. Based on an analysis of PVT variation effects and internal current consumption effects, including voltage variations due to impedance effects and current drops and surges due to device activity, an adaptive low threshold may be established which has a value of 1.4 volts for general modes of operation as indicated by line 35, and a value of 1.3 volts for particularly disruptive modes of operation such as program and erase modes of operation of the flash memory as indicated by line 36. The adaptive low threshold voltages are above the power-on-reset voltage level of 1.0 volts indicated by line 37, and illustratively the monolithic integrated circuit device is able to operate normally and without alarms during general modes of operation with transients which are not lower than 1.4 volts, and during flash memory program and erase modes of operations with transients which are not lower than 1.3 volts.

Waveform 33 represents possible V_{CC} behavior during actual normal device operation. A high voltage glitch 30 occurs within the specified V_{CC} range and requires no special handling. Two low voltage glitches 38 and 39 are under the minimum specified V_{CC} of 1.62 volts. The glitch 38 occurs during one of the general modes of operation and neither affects proper operation of the monolithic integrated circuit nor exceeds the low threshold adaptively set at 1.4 volts corresponding to general modes of operation so that no alarm is triggered. The glitch 39 occurs during one of the program or erase modes of operation, and neither affects proper operation of the monolithic integrated circuit nor exceeds the low threshold adaptively set at 1.3 volts corresponding to the program and erase modes of operation so that no alarm is triggered. Should the glitch 39 occur during one of the general modes of operation for which the low threshold is adaptively set at 1.4 volts, the glitch 39 is identified as abnormal and an alarm may be triggered.

Although FIG. 3 provides an example of an adaptive threshold for low voltage transients, an adaptive threshold for high voltage transients may be established in a similar manner. Moreover, although the thresholds are described as being adaptive to program and erase modes of operation on the one hand, and to general modes of operation (modes other than program and erase) on the other hand, the thresholds may be adaptive in various ways to other modes of operation and other combinations of modes of operation, including more than two modes of operation.

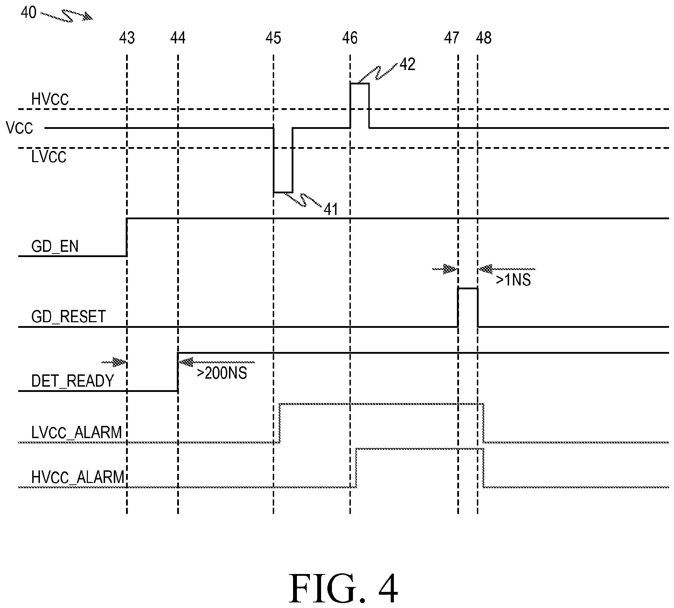

FIG. 4 shows a set 40 of idealized timing waveforms for the setting and resetting of the low and high supply voltage alarms of the adaptive glitch detector 10 of FIG. 1, using adaptive supply voltage glitch detection. The supply voltage V_{CC} generally is provided at a specified level but two illustrative glitch events are shown, a low voltage glitch 41 which starts at time 45 and dips below the adaptive low threshold LV_{CC} (only a single voltage setting is shown for clarity), and a high voltage glitch 42 which starts at time 46 and exceeds the high threshold HV_{CC} (only a single voltage setting is shown for clarity). The adaptive glitch detector 10 may be enabled at the leading edge of the enable signal GD_EN at time 43, after which the adaptive glitch detector 10 signals ready by the positive transition of detector ready output signal DET_READY at time 44, illustratively greater than about 200nS after the enable signal GD_EN. When the low voltage glitch 41, which occurs at time 45, has a duration in excess of the minimum pulse width corresponding to LV_{CC}, it is detected by the glitch detector 10 which signals the low voltage alarm LV_{CC}_ALARM. In a similar manner, when the high voltage glitch 42, which occurs at time 46, has a duration in excess of the minimum pulse width corresponding to HV_{CC}, it is detected by the glitch detector 10 which signals the high voltage alarm HV_{CC}_ALARM. The alarms may be reset by the signal GD_RESET, which illustratively is asserted as a reset pulse of a width greater than about 1nS over a period from time 47 to time 48. As shown by the waveforms LV_{CC}_ALARM and HV_{CC}_ALARM, both alarms reset a short time after the falling edge of the reset pulse.

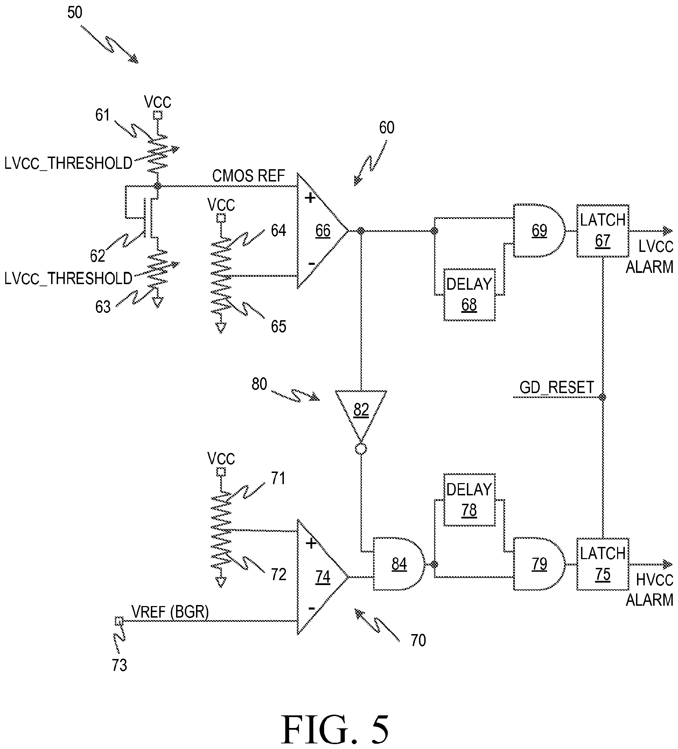

FIG. 5 is a schematic circuit diagram of an illustrative implementation 50 of the adaptive glitch detector 10 of FIG. 1. The adaptive glitch detector 10 includes a low threshold detector 60, a high threshold detector 70, and a power-on instability corrective circuit 80.

The low threshold detector 60 includes a differential amplifier 66 which is connected at its inverting input to a series resistance 64 and 65 connected between V_{CC} and ground to provide a suitable bias to the differential amplifier 66. The resistors 64 and 65 may be suitably trimmed during manufacturing to establish the desired bias. The non-inverting input is connected to a reference voltage for establishing the selected low threshold. Illustratively, the reference voltage may be a CMOS reference voltage provided by a circuit in which resistor 61, MOSFET 62, and resistor 63 are connected in series between V_{CC} and ground. Either one or both of the resistances 61 and 63 may be made variable using any desired technique. One suitable technique well known in the art is to various MOSFET transistors (not shown) to switch various resistances in or out for establishing two or more different CMOS reference levels. The low threshold signal LV_{CC}_THRESHOLD may be a variable voltage signal applied to the gates of such MOSFET transistors to control their on/off states. During default operation of the low threshold detector 60, the voltage on the inverting input of the differential amplifier 66 is greater than the voltage on the non-inverting input, so that a low voltage appears on the output of the differential amplifier 66 which is latched by latch 67. However, when a glitch causes V_{CC} to fall below the selected low threshold, the voltage on the inverting input of the differential amplifier 66 becomes less than the voltage on the non-inverting input, causing a positive transition at the output of the differential amplifier 66 which is latched by the latch 67 to generate the low threshold alarm LV_{CC}_ALARM.

The high threshold detector 70 includes a differential amplifier 74 which is connected at its non-inverting input to a series resistance 71 and 72, which is connected between V_{CC} and ground to provide a suitable bias to the differential amplifier 74. The resistors 71 and 72 may be suitably trimmed during manufacturing to establish the desired bias. The inverting input of the differential amplifier 74 is connected to a reference voltage for establishing the selected high threshold. Illustratively, the reference voltage 73 may be a variable band gap reference ("BGR") circuit, which varies a reference voltage V_{REF} depending on the desired high threshold. During default operation of the high threshold detector 70, the voltage on the non-inverting input of the differential amplifier 74 is less than the voltage on the inverting input, so that a low signal appears on the output of the differential amplifier 74, which keeps the output of the AND gate 84 low, which in turn is latched by latch 75. However, when a glitch causes V_{CC} to rise above the selected high threshold, the voltage on the non-inverting input of the differential amplifier 74 becomes greater than the voltage on the inverting input, causing a positive transition at the output of the differential amplifier 74 which raises the output of the AND gate 84 high (assuming a high level from the power-on instability corrective circuit 80), which in turn is latched by latch 75 to generate the high threshold alarm HV_{CC}_ALARM.

Note that the low threshold detector 60 is not normally responsive to high glitches, while the high threshold detector 70 is not normally responsive to low glitches. Should a high glitch occur, the voltage on the inverting input of the differential amplifier 66 merely rises higher, thereby maintaining the output of the differential amplifier 66 low. Should a low glitch occur, the voltage on the non-inverting input of the differential amplifier 74 merely falls lower, thereby maintaining the output of the differential amplifier 74 low.

The power-on instability corrective circuit 80 corrects a problem which occurs in many types of band gap reference circuits, namely that such circuits are unstable until V_{CC} reaches a certain minimum level. In particular, such band gap reference circuits are unstable during power-up when V_{CC} tends to be very low; for example, when V_{CC} tends to be in the range of 0.8 volts to 1.3 volts. Since V_{CC} is lower than the low threshold during this period, the low threshold detector 60 applies a high signal to inverter 82, which in turn applies a low signal to the AND gate 84, thereby blocking any signals generated by the differential amplifier 74 in the high threshold circuit 70, which may be false, from reaching the latch 75.

Suitable variable band gap circuits are well known in the art. In one suitable type of band gap circuit, MOSFET transistors (not shown) may be used to switch various resistances in or out for establishing two or more different band gap reference V_{REF} levels. The high threshold signal HV_{CC}_THRESHOLD may be a variable voltage signal applied to the gates of such MOSFET transistors to control their on/off states. An example of a suitable band gap reference circuit is described in Dominik Gruber et al., A Voltage Reference with On-Chip Trimmable Temperature Coefficient and Offset Voltage, MIXDES 2011, 18th International Conference "Mixed Design of Integrated Circuits and Systems," June 16-18, 2011, PP. 231-236, which hereby is incorporated herein in its entirety by reference thereto.

The low threshold minimum glitch duration and the high threshold minimum glitch duration may be fixed or variable, or one may be fixed and the other variable. If variable, the low (or high) glitch detection duration may be coordinated with or independent of the low (or high) threshold voltage level. An illustrative technique for implementing a variable glitch detection duration sub-circuit is shown in FIG. 5, where the output of the differential amplifier 66 in the low threshold detector 60 is applied to an AND gate 69 as well as to a delay circuit 68, so that a trigger signal passes through the AND gate 69 only if it is of sufficient duration to remain asserted while the same trigger signal is delayed through the delay 68. If it is desired to coordinate the low glitch detection duration with the low threshold voltage level, the signal LV_{CC}_THRESHOLD may be used as the control signal for the delay 68. Otherwise, a different signal may be used. In a similar manner, the output of the differential amplifier 74 in the high threshold detector 70 is applied to an AND gate 79 as well as to a delay circuit 78, so that a trigger signal passes through the AND gate 79 only if it is of sufficient duration to remain asserted while the same trigger signal is delayed through the delay 78. If it is desired to coordinate the high glitch detection duration with the high threshold voltage level, the signal HV_{CC}_THRESHOLD may be used as the control signal for the delay 78. Otherwise, a different signal may be used. Suitable variable delay circuits are well known in the art; *see, e.g.,* Jung-Lin Yang et al., Tunable Delay Element for Low Power VLSI Circuit Design, IEEE No. 1-4244-0549-1/06, 2006, PP. 1-4, which hereby is incorporated herein in its entirety by reference thereto.

The implementation of FIG. 5 is a example of one suitable adaptive glitch detector. Other voltage comparator circuits may be suitably modified to provide adaptive glitch detection in accordance with the description set forth in this patent document.

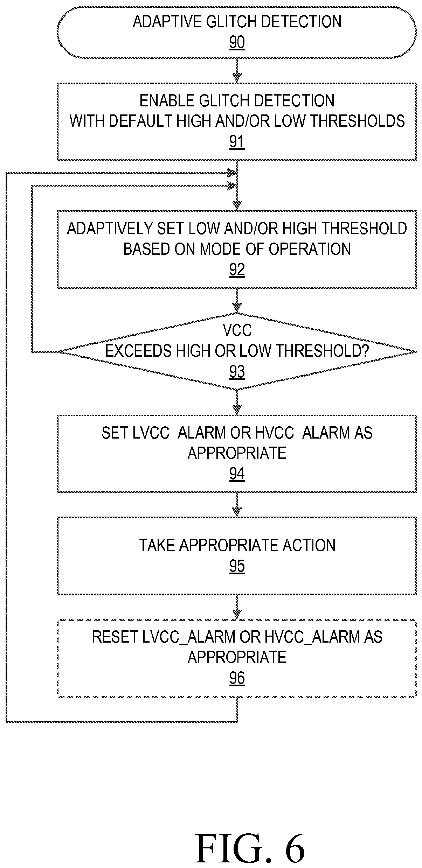

FIG. 6 is a flow chart showing an illustrative operating sequence 90 for the adaptive glitch detector 10 of FIG. 1. Glitch detection may be enabled (block 91) in any desired manner, either as part of the power-on or power-on-reset procedure or by command. Default low and/or high thresholds may be established upon enablement, if desired. While the monolithic integrated circuit device is in operation, the glitch detector may be adaptively configured to a low threshold, a high threshold, or both a low and high threshold as desired based on the mode of operation (block 92). If neither the low threshold nor high threshold is exceeded while the mode of operation is in effect (block 93 - NO), the sequence 90 returns to adaptively setting a low threshold, a high threshold, or both a low and high threshold as desired based on the mode of operation (block 92). However, if the low threshold or the high threshold is exceeded while the mode of operation is in effect (block 93 - YES), either the low threshold alarm LV_{CC}_ALARM or the high threshold alarm HV_{CC}_ALARM is set as appropriate (block 94) so that the monolithic integrated circuit device may take appropriate action (block 95), such as shutting down the device, resetting the device, setting a register bit to indicate a possible fault, or other desired action. For devices which continue operation after glitch detection, the low threshold alarm LV_{CC}_ALARM or the high threshold alarm HV_{CC}_ALARM is reset as appropriate (block 96) and the sequence 90 returns to adaptively setting a low threshold, a high threshold, or both a low and high threshold as desired based on the mode of operation (block 92).

### Exemplary Implementation: Glitch Detection for Secure Device

Nonvolatile digital memory may be used in monolithic integrated circuit devices to store sensitive information. Flash memory, for example, which is widely used in secure memory devices, systems-on-a-chip ("SOC"), and field-programmable gate arrays ("FPGA"), may be used to store instruction pointers, sensitive data, passwords, encryption keys, and the like, in any combination. Advantageously for these applications, flash memory is non-volatile, reprogrammable, one-time programmable, and low-power.

Unfortunately, many various types of secure integrated circuit devices are vulnerable to V_{CC} glitch attacks in which an attacker varies V_{CC} in an attempt to exploit possible weaknesses in the device design. In a Vcc undershoot glitch attack, for example, a flip-flop within the device logic may change state. Furthermore in this exemplary illustration, this may cause encryption logic, which checks whether commands are legal, to malfunction and allow illegal command to be executed. This is undesirable since security may be compromised. Detecting Vcc outside of the normal operating window and setting an alarm or taking other appropriate action is therefore useful for security of the secured chip.

To counter the threat of a Vcc glitch attack, an integrated circuit device may be provided with an adaptive glitch detector such as the adaptive glitch detector 10 (FIG. 1). The adaptive Vcc glitch detector may monitor Vcc at any desired location within the integrated circuit device, although monitoring as near to the external Vcc pin of the integrated circuit device as is practical may be advantageous in some integrated circuit devices to avoid the effects of internal circuit impedances on internal Vcc waveforms. Alternatively, monitoring V_{CC} near sensitive circuits may be advantageous in some integrated circuit devices.

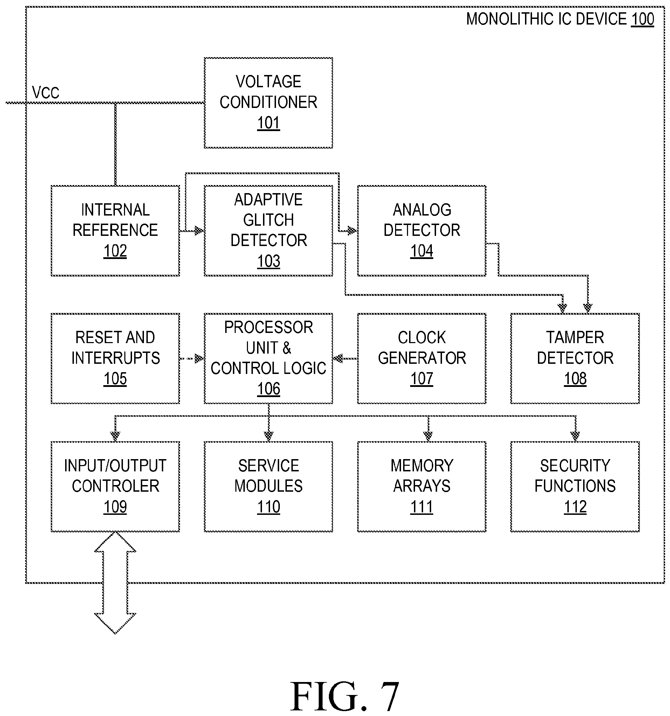

FIG. 7 is a schematic block diagram of an illustrative secure monolithic integrated device 100 which includes such circuits as voltage conditioner 101, internal reference 102, adaptive glitch detector 103, analog detector 104, reset and interrupts 105, processor unit and/or control logic 106, clock generator 107, tamper detector 108, input/output controller 109, service modules 110, memory arrays 111, and security functions (e.g. cryptography) 112. The adaptive glitch detector 103 provides the low threshold alarm signal LV_{CC}_ALARM and/or the high threshold alarm signal HV_{CC}_ALARM to the tamper detector 108, which determines an appropriate course of action in accordance with the threshold violated and the mode of operation in effect.

### Exemplary Implementation: Glitch Detection for Non-Secure Device

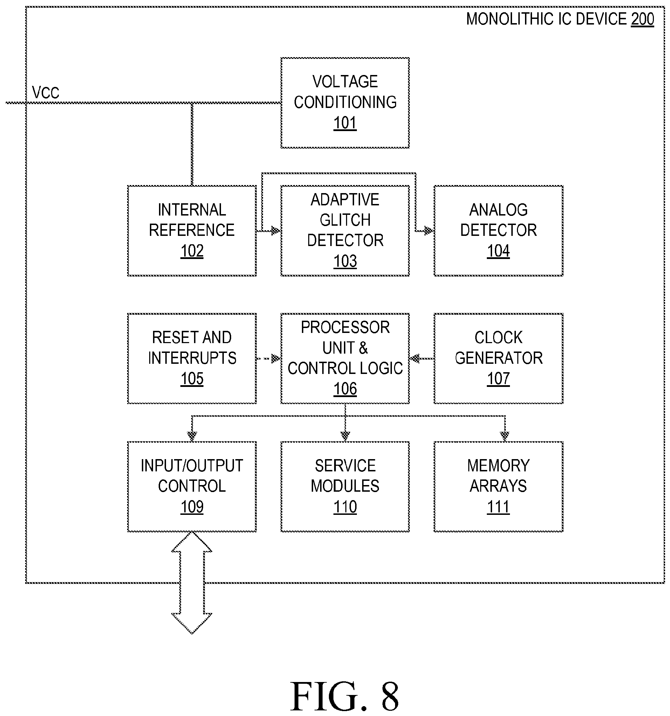

FIG. 8 is a schematic block diagram of an illustrative monolithic integrated device 200 which is similar to the secure monolithic integrated circuit device 100 (FIG. 7) but lacks the tamper detector 108 and security functions 112. The adaptive glitch detector 103 provides the low threshold alarm signal LV_{CC}_ALARM and/or the high threshold alarm signal HV_{CC}_ALARM to any desired functional element. The threshold alarm signals LV_{CC}_ALARM and/or HV_{CC}_ALARM may be provided, for example, to the reset and interrupts element 105 which may be configured to reset the device or certain functional elements of the device, or to processor unit and/or control logic 106 which may be configured to report the incident to an external device or circuit via input/output control 109.

## Claims

1. A method (90) for detecting a glitch (30, 38, 39; 41, 42) in supply voltage (VCC) provided to a monolithic integrated circuit device (100; 200) having various modes of operation and comprising a plurality of functional circuits (101 - 112) configured to operate respectively at the various modes of operation, the method comprising:
operating the device (100; 200) in a first mode of operation selected from the modes of operation;
configuring (92), by means of a supply voltage threshold detection circuit (50; 103) of the device (100; 200) and in response to the first mode operating step, a configurable detection threshold (LVCC, HVCC) as one of a plurality of detection thresholds respectively associated with one or more of the modes of operation, in accordance with the first mode of operation, wherein the supply voltage threshold detection circuit (50; 103) configures the configurable detection threshold (LVCC, HVCC) in response to a control signal provided by a control logic (106) of the device (100; 200), the control signal indicative of a currently active one of the various modes of operation; and
monitoring (93), by means of the supply voltage threshold detection circuit (50; 103), the supply voltage (VCC) for a glitch (39; 41, 42) that violates the configurable detection threshold (LVCC, HVCC) as configured in the configurable detection threshold configuring step (92).

2. The method of claim 1 wherein:
the configurable detection threshold (LVCC, HVCC) as configured in the configurable detection threshold configuring step (92) comprises a low voltage threshold (LVCC) for a predetermined minimum duration (68); and
the first glitch (39; 41) has a minimum voltage amplitude less than the low voltage threshold (LVCC) or the first glitch (39; 41) has a minimum voltage amplitude less than the low voltage threshold (LVCC) for a duration greater than the predetermined minimum duration.

3. The method of claim 1 wherein:
the configurable detection threshold (LVCC, HVCC) as configured in the configurable detection threshold configuring step (92) comprises a high voltage threshold (HVCC) for a predetermined minimum duration (78); and
the first glitch (42) has a maximum voltage amplitude greater than the high voltage threshold (HVCC) or the first glitch (42) has a maximum voltage amplitude greater than the high voltage threshold (HVCC) for a duration greater than the predetermined minimum duration (78).

4. The method of claim 1 wherein the plurality of detection thresholds (LVCC, HVCC) comprises a plurality of low detection thresholds (LVCC) and a plurality of high detection thresholds (HVCC), further comprising:
configuring (92), in further response to the first mode operating step, an additional configurable detection threshold (LVCC, HVCC) as one of the plurality of detection thresholds, in accordance with the first mode of operation, the configurable detection threshold being a low detection threshold (LVCC), and the additional configurable detection threshold being a high detection threshold (HVCC); and
further monitoring (93) the supply voltage (VCC) for a glitch (42) that violates the additional configurable detection threshold (HVCC) as configured in the additional configurable detection threshold configuring step (92).

5. The method of claim 4 further comprising:
detecting a first glitch (39; 41, 42) in the monitoring step (93), the further monitoring step (93), or both the monitoring step and the further monitoring step; and
setting (94) an alarm in response to the first glitch detecting step.

6. The method of claim 1 further comprising:
operating the device in a second mode of operation selected from the modes of operation, the second mode of operation being subsequent to and different than the first mode of operation;
configuring (92), in response to the second mode operating step, a subsequent configurable detection threshold (LVCC, HVCC) as one of the plurality of detection thresholds, in accordance with the second mode of operation; and
monitoring (93) the supply voltage (VCC) for a glitch (30, 38, 39; 41, 42) that violates the subsequent configurable detection threshold (LVCC, HVCC) as configured in the subsequent configurable detection threshold configuring step (92).

7. A monolithic integrated circuit device (100; 200) having various modes of operation, comprising:
a plurality of functional circuits (101 - 112) configured to operate respectively at the various modes of operation;
control logic (106) configured to provide a control signal indicative of a currently active one of the various modes of operation; and
a supply voltage threshold detection circuit (50; 103) adapted to be configured, in response to the control signal indicative of a currently active one of various modes of operation, in any one or more of a plurality of detection thresholds (LVCC, HVCC) respectively associated with one or more of the modes of operation, the supply voltage threshold detection circuit (50; 103) being coupled to the control logic (106) and configured in response to the control signal to provide an alarm on an output thereof when the supply voltage violates one of the detection thresholds (LVCC, HVCC) depending on the currently active mode of operation.

8. The monolithic integrated circuit device of claim 7, wherein
the detection thresholds (LVCC, HVCC) comprise low detection thresholds (LVCC) and high detection thresholds (HVCC); and
the supply voltage threshold detection circuit (50; 103) is configured in one of the low detection thresholds (LVCC) and one of the high detection thresholds (HVCC) for the currently active mode of operation.

9. The monolithic integrated circuit device of claim 8, wherein the supply voltage threshold detection circuit (50; 103) comprises:
a low threshold detector (60) having a CMOS reference circuit controlled by the control signal; and
a high threshold detector (70) having a band gap reference circuit controlled by the control signal.

10. The monolithic integrated circuit device of claim 9, wherein the supply voltage threshold detection circuit (50; 103) further comprises a power-on instability corrective circuit (80) having an input coupled to an output of the low threshold detector (60), and an output coupled to the high threshold detector (70) and configured to block (82) an alarm signal from the high threshold detector (70) during power-up of the monolithic integrated circuit.

11. The monolithic integrated circuit device of claim 7, wherein the supply voltage threshold detection circuit (50; 103) comprises:
a differential amplifier (66, 74) having an output, a bias input, and a variable reference voltage input responsive to the control signal; and
a latch (67, 75) coupled to the output of the differential amplifier (66, 74).

12. The monolithic integrated circuit device of claim 11, further comprising a CMOS reference circuit (61, 62, 63) responsive to the control signal and having an output coupled to the variable reference voltage input of the differential amplifier (66).

13. The monolithic integrated circuit device of claim 11, further comprising a band gap reference circuit (73) responsive to the control signal and having an output coupled to the variable reference voltage input of the differential amplifier (74).

## Patentansprüche

1. Verfahren (90) zum Erfassen eines Störimpulses (30, 38, 39; 41, 42) in einer Versorgungsspannung (VCC), die einem monolithischen IC-Bauelement (100; 200) zugeführt wird, das verschiedene Betriebsmodi aufweist und eine Vielzahl von Funktionsschaltungen (101 - 112) aufweist, die dafür konfiguriert sind, jeweils in den verschiedenen Betriebsmodi zu arbeiten, wobei das Verfahren die Schritte aufweist:
Betreiben des Bauelements (100; 200) in einem aus den Betriebsmodi ausgewählten ersten Betriebsmodus;
Konfigurieren (92) eines konfigurierbaren Erfassungsschwellenwertes (LVCC, HVCC) als einen von mehreren Erfassungsschwellenwerten, die jeweils einem oder mehreren der Betriebsmodi zugeordnet sind, mittels einer Versorgungsspannungsschwellenwerterfassungsschaltung (50; 103) des Bauelements (100; 200) und in Antwort auf den Schritt zum Betreiben des Bauelements im ersten Betriebsmodus gemäß dem ersten Betriebsmodus, wobei die Versorgungsspannungsschwellenwerterfassungsschaltung (50; 103) den konfigurierbaren Erfassungsschwellenwert (LVCC, HVCC) in Antwort auf ein Steuersignal konfiguriert, das durch eine Steuerlogik (106) des Bauelements (100; 200) bereitgestellt wird, wobei das Steuersignal einen aktuell aktiven der verschiedenen Betriebsmodi anzeigt; und
Überwachen (93) der Versorgungsspannung (VCC) mittels der Versorgungsspannungsschwellenwerterfassungsschaltung (50; 103) hinsichtlich eines Störimpulses (39; 41, 42), der den konfigurierbaren Erfassungsschwellenwert (LVCC, HVCC) verletzt, der im Konfigurationsschritt (92) für den konfigurierbaren Erfassungsschwellenwert konfiguriert wurde.

2. Verfahren nach Anspruch 1, wobei:
der konfigurierbare Erfassungsschwellenwert (LVCC, HVCC), der im Schritt (92) zum Konfigurieren des konfigurierbaren Erfassungsschwellenwerts konfiguriert wurde, einen niedrigen Spannungsschwellenwert (LVCC) für eine vorgegebene minimale Dauer (68) aufweist, und
der erste Störimpuls (39; 41) eine minimale Spannungsamplitude aufweist, die niedriger ist als der niedrige Spannungsschwellenwert (LVCC), oder der erste Störimpuls (39; 41) für eine Dauer, die größer ist als die vorgegebene minimale Dauer, eine minimale Spannungsamplitude aufweist, die niedriger ist als der niedrige Spannungsschwellenwert (LVCC).

3. Verfahren nach Anspruch 1, wobei:
der konfigurierbare Erfassungsschwellenwert (LVCC, HVCC), der im Schritt (92) zum Konfigurieren des konfigurierbaren Erfassungsschwellenwerts konfiguriert wurde, einen hohen Spannungsschwellenwert (HVCC) für eine vorgegebene Dauer (78) aufweist, und
der erste Störimpuls (42) eine maximale Spannungsamplitude aufweist, die größer ist als der hohe Spannungsschwellenwert (HVCC), oder der erste Störimpuls (42) für eine Dauer, die größer ist als die vorgegebene minimale Dauer (78), eine maximale Spannungsamplitude aufweist, die größer ist als der hohe Spannungsschwellenwert (HVCC).

4. Verfahren nach Anspruch 1, wobei die mehreren Erfassungsschwellenwerte (LVCC, HVCC) eine Vielzahl von niedrigen Erfassungsschwellenwerten (LVCC) und eine Vielzahl von hohen Erfassungsschwellenwerten (HVCC) aufweist, ferner mit den Schritten:
Konfigurieren (92) eines zusätzlichen konfigurierbaren Erfassungsschwellenwerts (LVCC, HVCC) in weiterer Antwort auf den Schritt zum Betreiben des Bauelements als einen der mehreren Erfassungsschwellenwerte gemäß dem ersten Betriebsmodus, wobei der konfigurierbare Erfassungsschwellenwert ein niedriger Erfassungsschwellenwert (LVCC) ist und der zusätzliche konfigurierbare Erfassungsschwellenwert ein hoher Erfassungsschwellenwert (HVCC) ist; und
weiteres Überwachen (93) der Versorgungsspannung (VCC) hinsichtlich eines Störimpulses (42), der den zusätzlichen konfigurierbaren Erfassungsschwellenwert (HVCC) verletzt, der im Schritt (92) zum Konfigurieren des zusätzlichen konfigurierbaren Erfassungsschwellenwerts konfiguriert wurde.

5. Verfahren nach Anspruch 4, ferner mit den Schritten:
Erfassen eines ersten Störimpulses (39; 41, 42) im Überwachungsschritt (93), im weiteren Überwachungsschritt (93) oder sowohl im Überwachungsschritt als auch im weiteren Überwachungsschritt; und
Setzen (94) eines Alarms in Antwort auf den Schritt zum Erfassen des ersten Störimpulses.

6. Verfahren nach Anspruch 1, ferner mit den Schritten:
Betreiben des Bauelements in einem aus den Betriebsmodi ausgewählten zweiten Betriebsmodus, wobei der zweite Betriebsmodus auf den ersten Betriebsmodus folgt und sich von diesem unterscheidet;
Konfigurieren (92) eines nachfolgenden konfigurierbaren Erfassungsschwellenwerts (LVCC, HVCC) als einen der Vielzahl von Erfassungsschwellenwerten in Antwort auf den Schritt zum Betreiben des Bauelements im zweiten Betriebsmodus gemäß dem zweiten Betriebsmodus; und
Überwachen (93) der Versorgungsspannung (VCC) hinsichtlich eines Störimpulses (30, 38, 39; 41, 42), der den nachfolgenden konfigurierbaren Erfassungsschwellenwert (LVCC, HVCC) verletzt, der im Schritt (92) zum Konfigurieren des nachfolgenden konfigurierbaren Erfassungsschwellenwerts konfiguriert wurde.

7. Monolithisches IC-Bauelement (100; 200) mit verschiedenen Betriebsmodi, das aufweist:
eine Vielzahl von Funktionsschaltungen (101 - 112), die dafür konfiguriert sind, jeweils in den verschiedenen Betriebsmodi zu arbeiten;
eine Steuerlogik (106), die dafür konfiguriert ist, ein Steuersignal bereitzustellen, das einen aktuell aktiven der verschiedenen Betriebsmodi anzeigt; und
eine Versorgungsspannungsschwellenwerterfassungsschaltung (50; 103), die dazu eingerichtet ist, in Antwort auf das Steuersignal, das einen aktuell aktiven der verschiedenen Betriebsmodi anzeigt, in einem oder mehreren einer Vielzahl von Erfassungsschwellenwerten (LVCC, HVCC) konfiguriert zu werden, die jeweils einem oder mehreren der Betriebsmodi zugeordnet sind, wobei die Versorgungsspannungsschwellenwerterfassungsschaltung (50; 103) mit der Steuerlogik (106) verbunden und dafür konfiguriert ist, in Antwort auf das Steuersignal an einem Ausgang davon einen Alarm bereitzustellen, wenn die Versorgungsspannung einen der Erfassungsschwellenwerte (LVCC, HVCC) in Abhängigkeit vom aktuell aktiven Betriebsmodus verletzt.

8. Monolithisches IC-Bauelement nach Anspruch 7, wobei
die Erfassungsschwellenwerte (LVCC, HVCC) niedrige Erfassungsschwellenwerte (LVCC) und hohe Erfassungsschwellenwerte (HVCC) aufweist, und
die Versorgungsspannungsschwellenwerterfassungsschaltung (50; 103) in einem der niedrigen Erfassungsschwellenwerte (LVCC) und einem der hohen Erfassungsschwellenwerte (HVCC) für den aktuell aktiven Betriebsmodus konfiguriert ist.

9. Monolithisches IC-Bauelement nach Anspruch 8, wobei die Versorgungsspannungsschwellenwerterfassungsschaltung (50; 103) aufweist:
einen Detektor (60) für niedrige Schwellenwerte mit einer durch das Steuersignal gesteuerten CMOS-Referenzschaltung; und
einen Detektor (70) für hohe Schwellenwerte mit einer durch das Steuersignal gesteuerten Bandlückenreferenzschaltung.

10. Monolithisches IC-Bauelement nach Anspruch 9, wobei die Versorgungsspannungsschwellenwerterfassungsschaltung (50; 103) ferner eine Einschaltinstabilitätskorrekturschaltung (80) aufweist, die einen mit einem Ausgang des Detektors (60) für niedrige Schwellenwerte gekoppelten Eingang und einen mit dem Detektor (70) für hohe Schwellenwerte gekoppelten Ausgang aufweist und dafür konfiguriert ist, ein Alarmsignal vom Detektor (70) für hohe Schwellenwerte während des Einschaltens des monolithischen IC-Bauelements zu blockieren (82).

11. Monolithisches IC-Bauelement nach Anspruch 7, wobei die Versorgungsspannungsschwellenwerterfassungsschaltung (50; 103) aufweist:
einen Differenzverstärker (66, 74) mit einem Ausgang, einem Vorspannungseingang und einem auf das Steuersignal ansprechenden variablen Referenzspannungseingang; und
einen mit dem Ausgang des Differenzverstärkers (66, 74) verbundenen Signalspeicher (67, 75).

12. Monolithisches IC-Bauelement nach Anspruch 11, ferner mit einer CMOS-Referenzschaltung (61, 62, 63), die auf das Steuersignal anspricht und einen mit dem variablen Referenzspannungseingang des Differenzverstärkers (66) verbundenen Ausgang aufweist.

13. Monolithisches IC-Bauelement nach Anspruch 11, ferner mit einer Bandlückenreferenzschaltung (73), die auf das Steuersignal anspricht und einen mit dem variablen Referenzspannungseingang des Differenzverstärkers (74) verbundenen Ausgang aufweist.

## Revendications

1. Procédé (90) de détection d'une anomalie (30, 38, 39 ; 41, 42) de la tension d'alimentation (VCC) fournie à un dispositif à circuit intégré monolithique (100 ; 200) ayant divers modes de fonctionnement et comprenant une pluralité de circuits fonctionnels (101 - 112) configurés pour fonctionner respectivement aux divers modes de fonctionnement, le procédé comprenant :
la mise en fonctionnement du dispositif (100 ; 200) dans un premier mode de fonctionnement sélectionné parmi les modes de fonctionnement ;
la configuration (92), au moyen d'un circuit de détection de seuil de tension d'alimentation (50 ; 103) du dispositif (100 ; 200) et en réponse à l'étape du premier mode de fonctionnement, un seuil de détection configurable (LVCC, HVCC) comme l'un d'une pluralité de seuils de détection respectivement associés à un ou plusieurs des modes de fonctionnement, conformément au premier mode de fonctionnement, dans lequel le circuit de détection de seuil de tension d'alimentation (50 ; 103) configure le seuil de détection configurable (LVCC, HVCC) en réponse à un signal de commande fourni par une logique de commande (106) du dispositif (100 ; 200), le signal de commande indiquant un mode de fonctionnement actuellement actif parmi les différents modes de fonctionnement ; et
la surveillance (93), au moyen du circuit de détection de seuil de tension d'alimentation (50 ; 103), la tension d'alimentation (VCC) pour une anomalie (39 ; 41, 42) qui viole le seuil de détection configurable (LVCC, HVCC) tel que configuré dans l'étape de configuration de seuil de détection configurable (92).

2. Procédé selon la revendication 1 dans lequel :
le seuil de détection configurable (LVCC, HVCC) tel que configuré dans l'étape de configuration du seuil de détection configurable (92) comprend un seuil de tension bas (LVCC) pour une durée minimale prédéterminée (68) ; et
la première anomalie (39 ; 41) a une amplitude de tension minimale inférieure au seuil de tension bas (LVCC) ou la première anomalie (39 ; 41) a une amplitude de tension minimale inférieure au seuil de tension bas (LVCC) pendant une durée supérieure à la durée minimale prédéterminée.

3. Procédé selon la revendication 1 dans lequel :
le seuil de détection configurable (LVCC, HVCC) tel que configuré à l'étape de configuration du seuil de détection configurable (92) comprend un seuil de tension haut (HVCC) pour une durée minimale prédéterminée (78) ; et
la première anomalie (42) a une amplitude de tension maximale supérieure au seuil de tension haut (HVCC) ou la première anomalie (42) a une amplitude de tension maximale supérieure au seuil de tension haut (HVCC) pendant une durée supérieure à la durée minimale prédéterminée (78).

4. Procédé selon la revendication 1 dans lequel la pluralité de seuils de détection (LVCC, HVCC) comprend une pluralité de seuils de détection bas (LVCC) et une pluralité de seuils de détection hauts (HVCC), comprenant en outre :
la configuration (92), en réponse à l'étape du premier mode de fonctionnement, un seuil de détection configurable supplémentaire (LVCC, HVCC) comme l'un de la pluralité de seuils de détection, conformément au premier mode de fonctionnement, le seuil de détection configurable étant un seuil de détection bas (LVCC), et le seuil de détection configurable supplémentaire étant un seuil de détection haut (HVCC) ; et
la surveillance en outre (93) la tension d'alimentation (VCC) pour une anomalie (42) qui viole le seuil de détection configurable supplémentaire (HVCC) tel que configuré dans l'étape de configuration du seuil de détection configurable supplémentaire (92).

5. Procédé selon la revendication 4 comprenant en outre :
la détection d'une première anomalie (39 ; 41, 42) à l'étape de surveillance (93), à l'étape de surveillance supplémentaire (93) ou à la fois à l'étape de surveillance et à l'étape de surveillance supplémentaire ; et
le déclenchement (94) d'une alarme en réponse à l'étape de détection de la première anomalie.

6. Procédé selon la revendication 1 comprenant en outre :
la mise en fonctionnement du dispositif dans un deuxième mode de fonctionnement sélectionné parmi les modes de fonctionnement, le deuxième mode de fonctionnement étant postérieur au premier mode de fonctionnement et différent du premier mode de fonctionnement ;
la configuration (92), en réponse à l'étape du deuxième mode de fonctionnement, d'un seuil de détection configurable ultérieur (LVCC, HVCC) comme l'un de la pluralité de seuils de détection, conformément au deuxième mode de fonctionnement ; et
la surveillance (93) de la tension d'alimentation (VCC) pour une anomalie (30, 38, 39 ; 41, 42) qui viole le seuil de détection configurable ultérieur (LVCC, HVCC) tel qu'il a été configuré dans l'étape de configuration du seuil de détection configurable ultérieur (92).

7. Dispositif à circuit intégré monolithique (100 ; 200) ayant divers modes de fonctionnement, comprenant :
une pluralité de circuits fonctionnels (101 - 112) configurés pour fonctionner respectivement dans les différents modes de fonctionnement ;
une logique de commande (106) configurée pour fournir un signal de commande indiquant que l'un des divers modes de fonctionnement est actuellement actif ; et
un circuit de détection de seuil de tension d'alimentation (50 ; 103) conçu pour être configuré, en réponse au signal de commande indiquant l'un des divers modes de fonctionnement actuellement actifs, dans un ou plusieurs des seuils de détection (LVCC, HVCC) respectivement associés à un ou plusieurs des modes de fonctionnement, le circuit de détection de seuil de tension d'alimentation (50 ; 103) étant couplé à la logique de commande (106) et configuré en réponse au signal de commande pour fournir une alarme sur une sortie lorsque la tension d'alimentation viole l'un des seuils de détection (LVCC, HVCC) en fonction du mode de fonctionnement actuellement actif.

8. Dispositif à circuit intégré monolithique selon la revendication 7, dans lequel
les seuils de détection (LVCC, HVCC) comprennent des seuils de détection bas (LVCC) et des seuils de détection hauts (HVCC) ; et
le circuit de détection de seuil de tension d'alimentation (50 ; 103) est configuré dans l'un des seuils de détection bas (LVCC) et l'un des seuils de détection haut (HVCC) pour le mode de fonctionnement actuellement actif.

9. Dispositif à circuit intégré monolithique selon la revendication 8, dans lequel le circuit de détection de seuil de tension d'alimentation (50 ; 103) comprend :
un détecteur de seuil bas (60) ayant un circuit de référence CMOS contrôlé par le signal de commande ; et
un détecteur de seuil haut (70) ayant un circuit de référence à bande interdite commandé par le signal de commande.

10. Dispositif à circuit intégré monolithique selon la revendication 9, dans lequel le circuit de détection de seuil de tension d'alimentation (50 ; 103) comprend en outre un circuit correcteur d'instabilité à la mise sous tension (80) ayant une entrée couplée à une sortie du détecteur de seuil bas (60), et une sortie couplée au détecteur de seuil haut (70) et configuré pour bloquer (82) un signal d'alarme provenant du détecteur à seuil haut (70) pendant la mise sous tension du circuit intégré monolithique.

11. Dispositif à circuit intégré monolithique selon la revendication 7, dans lequel le circuit de détection de seuil de tension d'alimentation (50 ; 103) comprend :
un amplificateur différentiel (66, 74) ayant une sortie, une entrée de polarisation et une entrée de tension de référence variable réagissant au signal de commande ; et
un verrou (67, 75) couplé à la sortie de l'amplificateur différentiel (66, 74).

12. Dispositif à circuit intégré monolithique selon la revendication 11, comprenant en outre un circuit de référence CMOS (61, 62, 63) réagissant au signal de commande et ayant une sortie couplée à l'entrée de tension de référence variable de l'amplificateur différentiel (66).

13. Dispositif à circuit intégré monolithique selon la revendication 11 comprenant en outre un circuit de référence de bande interdite (73) réagissant au signal de commande et ayant une sortie couplée à l'entrée de tension de référence variable de l'amplificateur différentiel (74).
